# EUROPEAN PATENT SPECIFICATION

(11) **EP 3 953 027 B1**
(45) Date of publication and mention of the grant of the patent: **03.07.2024**
(21) Application number: 20718303.9
(22) Date of filing: 09.04.2020
(51) Int. Cl.: B01F 25/10, B29B 7/74, B29B 7/76, B29B 7/90

(54) **INTENSIVE MIXING TOOL FOR PRODUCING ELASTOMER-BASED COMPOSITES**
INTENSIVMISCHER ZUR HERSTELLUNG VON ELASTOMER-BASIERTEN VERBUNDWERKSTOFFEN
APPAREIL DE MÉLANGEAGE INTENSIF POUR LA PRODUCTION DE COMPOSITES À BASE D'ÉLASTOMÈRE

(30) Priority: 10.04.2019 FR 1903830
(43) Date of publication of application: 16.02.2022
(73) Proprietor: COMPAGNIE GENERALE DES ETABLISSEMENTS MICHELIN, 63000 Clermont-Ferrand (FR)
(72) Inventor: KANAAN, Charbel, 63040 CLERMONT-FERRAND Cedex 9 (FR); VIVIER, Richard, 63040 CLERMONT-FERRAND Cedex 9 (FR)
(74) Representative: M.F.P. Michelin
(86) International application number: PCT/EP2020/060128
(87) International publication number: WO 2020/208130

(56) References cited:
- EP-A1- 1 409 101
- DE-A1- 1 493 663
- DE-T5-112016 003 169

## Description

### Technical field

The invention is directed to an apparatus and method for producing elastomer-based composites, and particularly the production of elastomer-filler masterbatches, that are destined for use in finished and semi-finished elastomeric rubber products such as tires.

### State of the art

In the art of producing elastomer-based composites, the term "masterbatch" refers to an elastomer-based composite into which a filler (organic or inorganic) has been introduced. In some masterbatches, the filler is introduced with one or more optional additives to obtain desired properties in rubber products derived from the selected masterbatch (such properties including, but not limited to, high wear resistance, high durability and low hysteresis). The masterbatches are then used for the manufacture of reinforced diene rubber compositions, intended, for example, for the manufacture of tires or of semi-finished products for tires (including, but not limited to, profiled products such as treads and reinforcing plies).

It is known to obtain a masterbatch by continuous liquid mixing. In such a case, in the realization of elastomeric composites, the passage of a liquid mixture (e.g., a mixture of an emulsion of elastomer and a slurry of charge or filler) to a viscoelastic solid is effected by coagulation (as used herein, the terms "charge" and "filler" are interchangeable). To obtain the optimum reinforcing properties conferred by a filler in a rubber composition, it is known that it is generally advisable for this filler to be present in the elastomer matrix in a final form which is both as finely divided as possible and as uniformly distributed as possible. Such conditions are realized only when this filler can be readily incorporated into the matrix during mixing with the elastomer and also readily de-agglomerated. Such filler must also be capable of being uniformly dispersed in this matrix.

Various methods exist for producing elastomeric masterbatch composites. US Patent No. 6,048,923 (the '923 Patent), for example, describes a process for continuously preparing a filled rubber masterbatch that consists in bringing into contact, in a mixing zone, a first liquid-phase flow and a second liquid-phase flow. The first flow is an elastomer emulsion, and the second flow is an aqueous suspension of filler particles. The second flow is introduced under very high pressure into the mixing zone in order to form a stream sufficiently energetic to entrain the first flow and substantially completely coagulate the elastomer with the filler particles. The filler particles that are used are particles of carbon black.

German Patent No DE112016003169 discloses a device and method for producing masterbatch composites as per the preamble of claim 1, and is directed to methods of making silica elastomer composites and the composites formed thereby. Reference is also made to German Publication No. DE1493663 (directed to a process for continuous preparation of an alkali metal salt).

It is appreciated that carbon black, unlike silica, exhibits a natural affinity with natural rubber. Silica particles have a tendency to agglomerate in the elastomer matrix, thereby limiting the dispersion of the filler therein. Thus, silica requires a customized method for producing a masterbatch having valuable material properties. One such method is disclosed by US Patent No. 10,000,612 (the '612 Patent), which describes the process that is disclosed by the '923 Patent as being ineffective "for producing elastomer composites employing silica particles as the sole or principal reinforcing agent" (col. 1, lines 50-55).

It has not heretofore been established that the implementation of an intensive mixing tool may be applied in the rubber mixing domain, particularly with respect to the coagulation of an elastomer emulsion with a suspension of solid filler. The majority of intensive mixing tools rely on turbulent mixing as an efficient mechanism for dispersing the solutions into sufficiently small volume elements (or "turbulent eddies"). The small size of these eddies enables fast diffusion of the reactants over very short distances. Intensive mixing tools of various designs that enable efficient turbulent mixing have been constructed, and these range from T- or Y-mixers to more complex geometries, such as multiple-jet tangential mixers. Tangential jet mixers provide an example of an intensive mixing tool in which high-intensity mixing of fluids attains an almost homogeneous composition of high supersaturation before the onset of agglomeration. In a tangential jet mixer, at least two reactants are introduced into the mixer as two streams in a diametrically opposed but offset manner. These mixers have the advantage of high throughout and an inexpensive setup, even for small volumes. Their effectiveness relies upon the need for the mixing time to be shorter than the mean residence time. Adjustment of the inlet jet velocity may be accomplished by changing the incoming flow rate or by changing an inner injection channel diameter while maintaining the same flow rate.

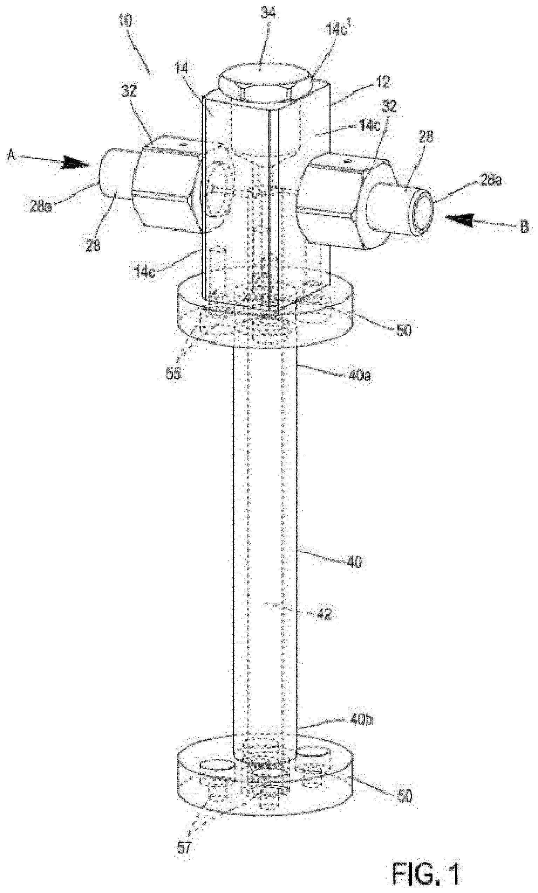

The implementation of these mixers on fast reactive systems is established in several fields outside of the rubber-mixing domain. US Publication No. 2014/0205522, for example, discloses a process for producing a composition for use in catalysis, the composition being based on oxides of cerium, zirconium and at least one rare-earth metal other than cerium. A reactor of rapid mixer type (shown and described with reference to FIG. 1 of the publication) may be used that may be chosen from T-shaped or Y-shaped mixers, tangential-jet mixers, Hartridge-Roughton mixers or vortex mixers.

In order to obtain optimum reinforcing properties conferred by a filler in a tire tread, and thus a high wear resistance, it is generally advisable for this filler to be present in the elastomer material in a final form that is both as finely divided as possible and as homogeneously distributed as possible. To advance this distribution, the disclosed invention employs an intensive mixing tool in a heretofore unknown manner that assures advantageous mixing conditions between a filler in an aqueous medium and an elastomer emulsion, even when silica is selected as the filler.

### Summary of the invention

The invention provides a system for producing an elastomer-filler masterbatch as per the subject-matter of claim 1. The system comprises an elastomer emulsion stored in a liquid phase in an emulsion reservoir; a slurry solution stored in a liquid phase in a slurry reservoir; and an intensive mixing tool in fluid communication with each of the emulsion reservoir and the slurry reservoir. The intensive mixing tool has an intensive mixing unit with a central body of predetermined height that is coextensive with an inlet extent and an opposed outlet extent, the central body including an external quadrilateral surface and an annular inner wall surface that defines a generally cylindrical mixing chamber of predetermined cross-sectional diameter relative to a central axis of the mixing chamber and having a central axis that is coaxial with a central axis of the mixing body. The mixing chamber has a predetermined length that is coextensive with an inlet extent of the mixing chamber and an egress extent of an integral and generally cylindrical projection that depends normally from the outlet extent of the central body. The intensive mixing tool also has an injector inlet that extends normally from each of a pair of opposed side surfaces of the central body such that at least a pair of injection inlets are located symmetrically and in opposing manner relative to a central axis of the central body, each injector inlet including a supply conduit defined therein that establishes fluid communication between an injector ingress via which one of an elastomer emulsion and a slurry solution enter the mixing unit and a corresponding injection conduit in registry therewith, each injector inlet establishing fluid communication between one of an elastomer emulsion reservoir from which a predetermined volume of the emulsion is introduced as a continuous flow under pressure, and a slurry solution reservoir from which a predetermined volume of the slurry is introduced as a continuous flow under pressure such that simultaneous injection of the elastomer emulsion and the slurry solution into the mixing chamber forms a vortex therein.

In some embodiments of the system, each supply conduit includes a generally cylindrical entry portion of predetermined length that feeds into a feed portion of the supply conduit with the feed portion having a generally frustoconical geometry with a predetermined extent that is coextensive with a base disposed adjacent the entry portion and a summit disposed adjacent a feeding extent of a corresponding injection conduit. A tapering wall of each feed portion is defined at a predetermined acute angle relative to a central axis of the supply conduit and the corresponding injection conduit. For such embodiments, each injection conduit includes a predetermined length that is coextensive with its feeding extent and an opposed delivery extent that delivers a continuous flow from the corresponding supply conduit to the mixing chamber, each injection conduit having a predetermined cross-sectional diameter that remains constant along the length thereof and that corresponds to a cross-sectional diameter of a corresponding summit of the feed portion of the supply conduit. For some of these embodiments, the angle is from about 30° to about 45° inclusive.

In some embodiments of the system, the injection inlet of the intensive mixing tool includes a recess defined proximate each injector ingress so as to accommodate a sealing member thereby.

The mixing tool further comprises a supply piece that is detachably secured with each injector inlet at a respective injector ingress thereof. The supply piece has a predetermined length coextensive with a supply extent and a delivery extent of the supply piece, and the supply piece is in fluid communication with one of the emulsion reservoir and the slurry reservoir to facilitate uninterrupted delivery of a respective continuous flow to the mixing unit. The supply piece has a generally frustoconical conduit defined therein that is coextensive with the supply extent and the delivery extent of the supply piece, the conduit of the supply piece having a variable cross-sectional diameter from the supply extent of the supply piece, at which the conduit of the supply piece has a cross-sectional diameter commensurate with a cross-sectional diameter of a delivery conduit in fluid communication therewith, to the delivery extent of the supply piece, having a cross-sectional diameter commensurate with the cross-sectional diameter of the feed section of the supply conduit. For some of these embodiments, the intensive mixing tool further comprises a mixture outlet in detachable securement with the central body so as to establish fluid communication therewith. The mixture outlet includes an elongate cylindrical member of predetermined length that is coextensive with an ingress extent disposed at or adjacent the egress extent of the projection, and an opposed egress extent, the mixture outlet also including a generally cylindrical conduit defined along the length thereof and having a constant cross-sectional diameter.

In some embodiments of the system, the central body of the intensive mixing tool includes a recess defined within the central body that establishes fluid communication with the mixing chamber. The recess has a central axis that is coextensive with the central axes of the central body and the mixing chamber. For some of these embodiments, the intensive mixing tool further comprises a closure disposed along a top surface of the central body and having a geometry that complements insertion of the closure therein.

In some embodiments of the system, the elastomer emulsion comprises an elastomer selected from at least one of natural rubber, at least one synthetic elastomer and one or more elastomer blends; and the slurry solution comprises a solution in which filler particles are dispersed in an aqueous medium, and the filler is selected from at least one of carbon black, silica, kaolin, chalk, synthesized organic charges, natural organic charges, and equivalents and combinations thereof.

In some embodiments of the system, the central body of the intensive mixing tool includes two pairs of generally cylindrical tangential injector inlets, with one pair of injector inlets located symmetrically and in opposing manner relative to one another and relative to the central axis of the central body so as to inject a continuous flow of the elastomer emulsion into the mixing chamber, and with another pair of injector inlets, located symmetrically and in opposing manner relative to one another and relative to the central axis of the central body so as to inject a continuous flow of the slurry into the mixing chamber, with the injector inlets that inject the slurry into the mixing chamber being normally offset from the injector inlets that inject the emulsion.

The invention also provides a method of producing an elastomer-filler masterbatch as per claim 10, comprising the following steps:
- providing a system as disclosed herein;
   - introducing the elastomer emulsion into at least one injector inlet as a continuous flow under pressure;
   - introducing the slurry solution into at least one other injector inlet as a continuous flow under pressure; and
   - simultaneously injecting a predetermined volume of the elastomer emulsion and a predetermined volume of the slurry solution into the mixing chamber such that the separately injected flows impinge upon one another and form a vortex in the mixing chamber to obtain a flow of coagulated material therefrom that is the masterbatch.

In some embodiments, the method also comprises the step of introducing at least one salt during the step of simultaneously injecting the elastomer emulsion and the slurry solution into the mixing chamber.

In some embodiments, the method also comprises, during the step of simultaneously injecting the elastomer emulsion and the slurry solution into the mixing chamber, the step of introducing one or more components selected from one or more antioxidants, sulfur, one or more resins, one or more catalysts, one or more coupling agents, one or more elastomer composites and any equivalent and combination thereof.

Other aspects of the disclosed invention will become readily apparent from the following detailed description.

### Brief description of the drawings

The nature and various advantages of the presently disclosed invention will become more apparent upon consideration of the following detailed description, taken in conjunction with the accompanying drawings, in which like reference characters refer to like parts throughout, and in which:
FIG. 1 shows a front perspective view of an embodiment of an intensive mixing apparatus of the present invention.
FIG. 2 shows a front perspective view of a mixing unit of the intensive mixing apparatus of FIG. 1.
FIG. 3 shows a sectional view of the mixing unit of FIG. 2 along line A-A, and FIG. 4 shows a sectional view of the mixing unit of FIG. 2 along line B-B.
FIG. 5 shows a side perspective view of a supply piece of the intensive mixing apparatus of FIG. 1.
FIG. 6 shows a sectional view of the supply piece of FIG. 5 along line A-A.

### Detailed description

Now referring further to the figures, in which like numbers identify like elements, FIG. 1 shows an intensive mixing apparatus 10 that forms part of a system for producing an elastomer-based masterbatch according to the method disclosed herein. The mixing apparatus 10 realizes continuous liquid mixing during a masterbatch production cycle, during which production cycle a composition is obtained according to a recipe that is selected from among a plurality of elastomeric composition recipes. The elastomeric composition is destined, for example, in the manufacture of tires and semi-finished products for tires (including but not limited to profiled products such as treads). As used herein, the terms "elastomer masterbatch composition", "elastomer-based masterbatch", "masterbatch composition" and "masterbatch" are interchangeable. As used herein, the terms "composition" and "composite" are interchangeable, each referring to the masterbatch composition that is produced by the disclosed invention throughout a production cycle (including an intermediate coagulum).

A system in which the intensive mixing tool 10 is utilized includes at least one emulsion reservoir (not shown) for storing an elastomer emulsion in a liquid phase, as is known in the art of rubber mixing. The elastomer is selected from natural rubber, various synthetic elastomers (e.g., SBR, BR, etc.) and various elastomer blends. As used herein, the terms "elastomer emulsion" and "emulsion" are interchangeable.

This system also includes a slurry reservoir (not shown) for storing a solution in which filler particles are dispersed in an aqueous medium, as is known in the art of rubber mixing (as used herein, such as solution is referred to as "slurry solution", "slurry" or "solution of filler", which terms are deemed to be interchangeable). The filler is selected from one or more known materials, including, but not limited, to carbon black, silica, kaolin, chalk, synthesized organic charges, natural organic charges (e.g., wood fibers, cellulose fibers, etc.) and equivalents and combinations thereof. Thus, regardless of whether the slurry solution contains silica, neither the intensive mixing tool 10 nor the system in which it is employed requires modification.

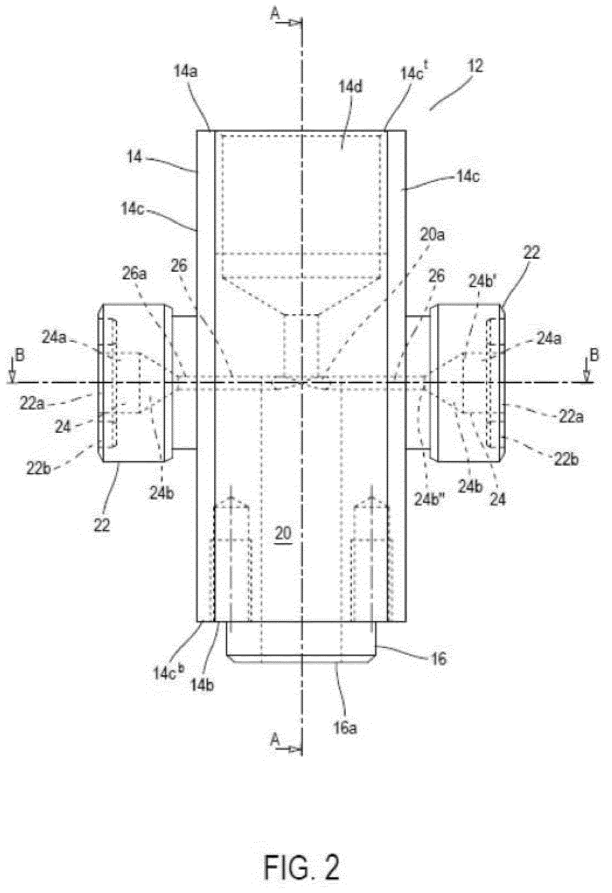

Still referring to FIG. 1 and also to FIGS. 2 to 4, the intensive mixing tool 10 is a tangential jet mixer that realizes a continuous liquid mixing process for producing a masterbatch composition. The intensive mixing tool 10 includes a mixing unit 12 having a central body 14 of predetermined height that is coextensive with an inlet extent 14a and an opposed outlet extent 14b (as used herein, the terms "central body", "mixing body", "mixing block" and "block" are interchangeable). The central body 14 includes an external surface 14c that is coextensive with the inlet extent 14a and the outlet extent 14b. An integral and generally cylindrical projection 16 that depends normally from the outlet extent 14b of the central body 14 terminates in an egress extent 16a.

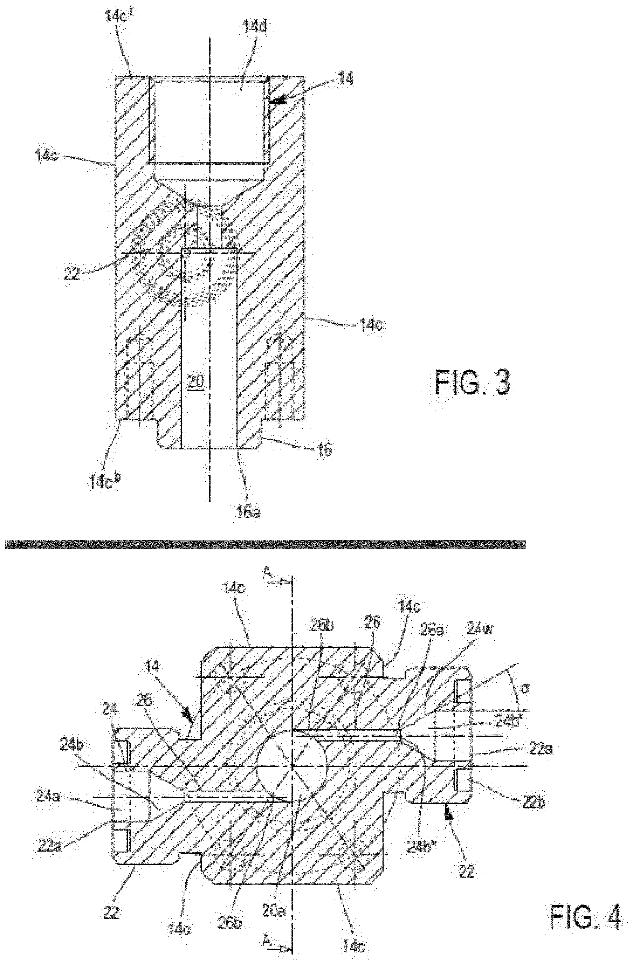

The central body also includes an annular inner wall surface 18 that defines a generally cylindrical mixing chamber 20 of predetermined cross-sectional diameter relative to a central longitudinal axis of the mixing chamber (see FIGS. 2 and 3). The central longitudinal axis of the mixing body 14 is coaxial relative to a central axis of the mixing chamber 20. The mixing chamber 20 has a predetermined length that is coextensive with an inlet extent 20a of the mixing chamber and the egress extent 16a of the projection 16, thereby defining an uninterrupted fluid conduit therealong. In some embodiments of the intensive mixing tool 10, the inlet extent 20a of the mixing chamber 20 is disposed at or about midway along the predetermined length of the central body 14.

In the embodiment shown in the figures, the external surface 14c of the central body 14 defines a generally quadrilateral geometry having a top surface 14c', an opposed bottom surface 14c^{b} and four side surfaces 14c^{s}. A generally cylindrical injection inlet (or "inlet") 22 extends normally from each of a pair of opposed side surfaces 14c^{s} such that a pair of injection inlets are located symmetrically and in opposing manner relative to the central longitudinal axis of the mixing body 14. Each injector inlet 22 may be integral with the central body 14 or removably attached thereto via known attachment means (including, without limitation, corresponding threads, notches and recesses, friction fit and equivalents thereof). Such removable attachment may be desirable in the provision of a kit that includes the central body 14 with multiple injection outlets of various diameters and lengths that accommodate multiple rubber production installations.

As shown with respect to the embodiment of FIGS. 1 to 4, the injector inlets 22 possess identical geometry with respect to one another. Each injector inlet has a generally cylindrical external geometry that includes an injector ingress 22a via which the elastomer emulsion and the slurry solution enter the mixing unit 12. Each injector inlet 22 also includes a supply conduit 24 defined therein that establishes fluid communication between each injector ingress 22a and a corresponding injection conduit 26 in registry therewith. At least one recess may be defined at or adjacent each injector ingress 22a so as to accommodate a sealing member as is known in the art. As shown in FIG. 4, such a recess is shown as a toroidal recess 22b.

Still referring to FIGS. 1 to 4, each supply conduit 24 includes a generally cylindrical entry portion 24a of predetermined length wherein the cross-sectional diameters of the entry portions are equal. Each entry portion 24a leads into a feed portion 24b of the supply conduit having a generally frustoconical geometry with a predetermined extent that is coextensive with a base 24b' disposed adjacent the respective entry portion 24a and a summit 24b" disposed adjacent a feeding extent 26a of a corresponding injection conduit 26. A tapering wall 24w of each feed portion 24b is defined at a predetermined acute angle θ relative to a central axis of the supply conduit 24 and the corresponding injection conduit 26. In some embodiments, this angle θ is from about 30° to about 45° inclusive. Each injection conduit 26 has a predetermined length that is coextensive with its feeding extent 26a and an opposed delivery extent 26b that delivers a continuous flow from the corresponding supply conduit to the mixing chamber 20. Each injection conduit 26 also has a predetermined cross-sectional diameter that remains constant along the length thereof and that corresponds to a cross-sectional diameter of a corresponding summit 24b" of the feeding portion 24b of the supply conduit.

In this configuration, the supply conduit 24 presents initially a constant cross-sectional diameter that stabilizes the incoming continuous flow along the predetermined length of the entry portion 24a. The supply conduit 24 presents thereafter a variable cross-sectional diameter along the predetermined extent of the feed portion 24b such that the diameter of the feed portion is continuously reduced from the base 24b' to the summit 24b". This reduction in diameter along the flow path of the supply conduit 24 limits the effect of an undesirable pressure drop upon the energy that is converted during mixing of the two injected flows. Each supply conduit 24 feeds, to a corresponding injection conduit 26, a continuous flow from a reservoir in fluid communication with a corresponding injector ingress 22a. One injector inlet 22, and particularly the supply conduit 24 thereof, can be disposed in fluid communication with the emulsion reservoir so as to introduce a continuous flow of the elastomer emulsion therefrom into the mixing unit 12. Being in registry with the corresponding injection conduit 26, the supply conduit 24 introduces a continuous flow of the emulsion under pressure into the injection conduit for delivery to the mixing chamber 20. Similarly, the other injector inlet 22, and particularly the supply conduit 24 thereof, can be disposed in fluid communication with the slurry reservoir so as to introduce a continuous flow of the slurry solution therefrom into the mixing unit 12. Being in registry with the injection conduit 26, the supply conduit introduces a continuous flow of the slurry under pressure into the injection conduit for delivery to the mixing chamber 20 at the same time delivery of the emulsion to the mixing chamber is effected by the corresponding injection conduit 26. Consequently, simultaneous injection of the emulsion and the slurry into the mixing chamber 20 forms a vortex therein.

It is understood that that the cross-sectional diameters of the supply conduits 24 (including the constant diameter of the entry portions 24a and the variable diameter of the feed portions 24b) and the cross-sectional diameter of the injection conduits 26 may be adjusted as a function of the selected mixture recipe and/or the impact energy required upon combining the injected emulsion and slurry in the mixing chamber 20. Such dimensions are selected to ensure an inlet velocity and/or a pressure drop that converts a targeted amount of energy into mixing efficiency in the mixing chamber 20.

It is understood that alternative embodiments of the intensive mixing tool 10 can include two pairs of generally cylindrical tangential injector inlets 22. For such embodiments, one pair of injector inlets 22, located symmetrically and in opposing manner relative to one another and relative to the central axis of the central body 14, facilitates injection of a continuous flow of the elastomer emulsion into the mixing unit 12 (and more particularly, the mixing chamber 20). Another pair of injector inlets 22, located symmetrically and in opposing manner relative to one another and relative to the central axis of the central body 14, facilitates injection of a continuous flow of the slurry solution into the mixing unit 12 (and more particularly, the mixing chamber 20). The injector inlets that facilitate injection of the slurry solution into the mixing chamber are normally offset from the injector inlets that inject the elastomer emulsion. During a production cycle, the two flows of the emulsion and the two flows of the slurry are injected separately but simultaneously into the mixing chamber 20 so as to form a vortex therein.

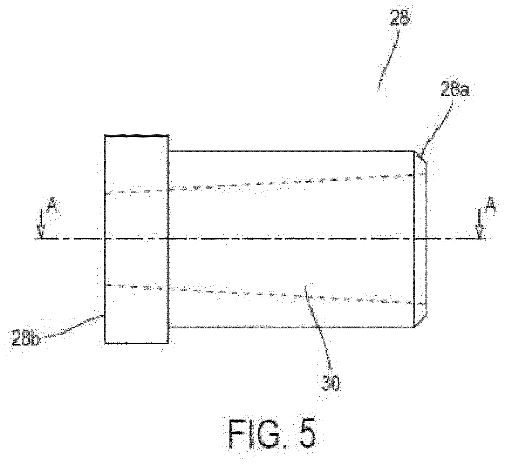

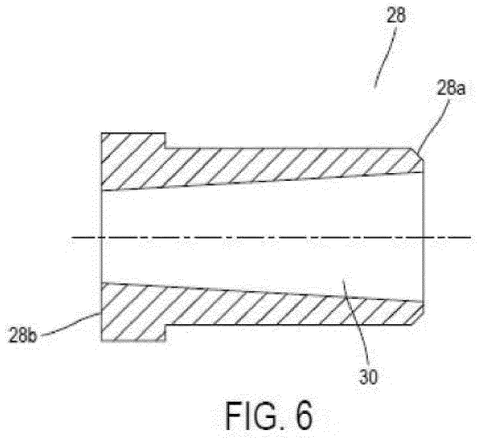

Still referring to FIGS. 1 to 4 and also referring to FIGS. 5 and 6, the intensive mixing tool 10 includes a supply piece 28 that is detachably secured with each injector inlet 22 at a respective injector ingress 22a thereof. The supply piece 28 has a predetermined length coextensive with a supply extent 28a and an opposed delivery extent 28b of the supply piece. The supply extent 28a is in fluid communication with one of the emulsion reservoir and the slurry reservoir to facilitate uninterrupted delivery of a respective continuous flow to the mixing unit 12. Such fluid communication may be effected by one or more delivery conduits (not shown) and/or equivalent delivery means as is known in the art.

Each supply piece 28 includes a generally frustoconical conduit 30 defined therein along the predetermined length of the supply piece 28 (see FIG. 6). The conduit 30 has a predetermined extent that is coextensive with the supply extent 28a and the delivery extent 28b of the supply piece 28. In this configuration, the conduit 30 presents a variable cross-sectional diameter such that the diameter is continuously reduced from the supply extent 28a (having a cross-sectional diameter commensurate with the cross-sectional diameter of a delivery conduit in fluid communication therewith) to the delivery extent 28b (having a cross-sectional diameter commensurate with the cross-sectional diameter of the entry portion 24a of the supply conduit 24). The resulting stabilization of the incoming flow from the corresponding reservoir is realized upon entry into each injector inlet 22, thereby further limiting the effect of an undesirable pressure drop upon the energy that is converted during mixing of the two injected flows. It is understood that that the variable cross-sectional diameter of the conduit 30 of the supply piece 28 may be adjusted as a function of the selected mixture recipe and/or the impact energy required upon combining the injected emulsion and slurry in the mixing chamber 20. Securement of each supply piece 28 with a corresponding injector inlet 22 may be effected by one or more known fasteners, including but not limited to fasteners 32 (see FIG. 1).

Referring to FIG. 1 and also to FIGS. 2 and 3, the intensive mixing tool 10 may include an optional closure 34 that permits full access to the mixing chamber 20 of the central body 14. The closure 34 is disposed along the top surface 14c^{t} of the central body 14 and may be detachably affixed thereat. The closure 34 has a geometry that complements that of a recess 14d defined within the central body 14. The recess 14d has a central axis that is coextensive with the central axes of the central body 14 and the mixing chamber 20. The recess 14d establishes fluid communication with the mixing chamber 20 and facilitates the supply of one or more additives and/or other components thereto. Such additives include, but are not limited to, one or more solutions of ionic salts, one or more solutions of acid, one or more mineral or organic bases and one or more organic molecules (including silanes). The closure 34 may also accommodate the insertion of one or more sensors or probes (not shown) for generating ultrasound and/or for effecting one or more measurements as is known in the art (e.g., measurements of temperature and pressure, optical measurements, etc.).

Still referring to FIG. 1, the intensive mixing tool 10 can include a mixture outlet 40 that is in detachable securement with the central body 14 so as to establish fluid communication therewith. The mixture outlet 40 includes an elongate cylindrical member of predetermined length that is coextensive with an ingress extent 40a, disposed at or adjacent the egress extent 16a of the projection 16, and an opposed egress extent 40b. The mixture outlet 40 includes a conduit 42 defined along the length thereof. In some embodiments, the conduit 42 may have a generally constant cross-sectional diameter therealong. In some other embodiments, the conduit 42 may have a varying cross-sectional diameter (i.e., divergent or convergent). For all such embodiments, the conduit 42 has a central axis that is coaxial with the central axes of the central body 14 and the mixing chamber 20, thereby ensuring an uninterrupted fluid path from the recess 14d through the mixing chamber 20 and through the mixture outlet 40. A hose or equivalent conduit (not shown) may be fitted to the egress extent 40b of the mixture outlet 40 to convey the masterbatch mixture toward one or more downstream rubber production installations while ensuring the filling of the mixing chamber 20.

As shown in FIG. 1, the intensive mixing tool 10 can additionally include one or more securement flanges 50 that effect securement of the mixing unit 12 with the mixture outlet 40. Securement may be effected by one or more fasteners 55 as is known in the art and/or by equivalents thereof. Similarly, one or more other securement flanges 50 may be employed that effect securement of the intensive mixing tool 10 with another element of a mixing installation in which the intensive mixing tool is employed (for example, a receptacle for receipt of the mixture that is conveyed from the mixture outlet 40). Securement may be effected by one or more fasteners 57 as is known in the art and/or by equivalents thereof. It is understood that flanges 50 and associated fasteners 55, 57 may be replaced by known equivalents (for example, all or part of the mixture outlet 40 may be secured by an external pipe, hose and/or collar as is known in the art).

An exemplary method is now described that is performed by the intensive mixing tool 10 for creating an elastomer-based masterbatch. The method includes a step of providing a system for producing an elastomer-filler masterbatch that includes the intensive mixing tool 10. Such a system also includes an elastomer emulsion stored in a liquid phase in an emulsion reservoir and a slurry solution stored in a liquid phase in a slurry reservoir. In the system, the intensive mixing tool 10 is provided in fluid communication with each of the emulsion reservoir and the slurry reservoir. In some embodiments of the method, the system includes an intensive mixing tool having two pairs of injector inlets 22.

The method also includes a step of introducing an elastomer emulsion as a continuous flow under pressure into one injector inlet (see arrow A of FIG. 1). In embodiments of the method utilizing an intensive mixing tool 10 having two pairs of injector inlets, this step includes the step of introducing the elastomer emulsion as a continuous flow under pressure into each of a pair of injector inlets 22 located symmetrically and in opposing manner relative to one another and relative to the central axis of the central body 14.

The method further includes, during the step of introducing the elastomer emulsion, a step of simultaneously introducing a slurry solution as a continuous flow under pressure into the other injector inlet 22 (see arrow B of FIG. 1). In embodiments of the method utilizing an intensive mixing tool 10 having two pairs of injector inlets, this step includes the step of introducing the slurry solution as a continuous flow under pressure into another pair of injector inlets 22. The second pair of injector inlets is located symmetrically and in opposing manner relative to one another and relative to the central axis of the central body 14, and they are normally offset from the injector inlets that inject the elastomer emulsion.

For rapid and concentrated coagulation, some embodiments of the method employ, during the step of simultaneously introducing the slurry solution, a solution of dispersed (structured or spherical) aqueous silica with silica concentrations greater than > 5%. For some of these embodiments, the silica concentration is at or about 20%.

During the steps of introducing the elastomer emulsion and simultaneously introducing the slurry solution, the respective flows are injected into the mixing chamber 20 by the injection conduits 26. As a result, the injected flows impinge upon one another, forming a vortex and obtaining a flow of coagulated material therefrom that is the masterbatch. A turbulence zone between the two fluids is conducive to mixing which ends with coagulation in the diffuser forming a cylindrical viscoelastic solid. The introduction of each flow into the mixing chamber 20 is generally carried out continuously so as to preserve the uniformity of the contact between the emulsion and the slurry solution.

In prior art mixing methods, cavitation often limits the rate at which turbulence can be induced. As disclosed herein, the use of the intensive mixing tool 10 enables the simultaneous acceleration of both the emulsion and the slurry. The comparable acceleration of the shearing level of the emulsion and slurry flows enhances the mixing efficiency at a molecular level.

In an embodiment of the disclosed method, the method also includes a step of introducing at least one salt during the step of simultaneously introducing the slurry solution.

In another embodiment of the method, the method also includes a step of blending the masterbatch with one or more additional components. Such components can be selected from one or more antioxidants, sulfur, one or more resins, one or more catalysts, one or more coupling agents, one or more elastomer composites and any equivalent and combination thereof.

In a method for making one or more tire products, the process includes the steps of preparing an elastomer-based masterbatch according to the method disclosed herein. The masterbatch is prepared as a vulcanizable compound that is vulcanized in a subsequent step to form the one or more tire products.

Thus, a process for creating an elastomer-based masterbatch in the context of rapid chemical reactions may be summarized as follows:
- A tangential mixer geometry is applied to the liquid mixing of lattices and charge suspensions (carbon black, silica, etc.) in order to achieve their coagulation. Coagulation may be caused by, or alternatively affected by, the optional addition of one or more additives (e.g., one or more of at least one ionic salt, at least one organic molecule, at least one acid/base combination, etc.).
- In realizing the described process, one can obtain the same level of homogeneity (e.g., a coefficient of variation (CoV) at or around 0.05) in a typical mixing time of the same order under milder conditions (e.g., 20-30 m/s instead of 45-80 m/s). Consequently, a more moderate pressure drop is generated (e.g., less than 10 bar instead of 20 bar).

As used herein, the term "method" or "process" may include one or more steps performed at least by one electronic or computer-based apparatus having a processor for executing instructions that carry out the steps.

The terms "at least one" and "one or more" are used interchangeably. Ranges that are described as being "between a and b" are inclusive of the values for "a" and "b."

While particular embodiments of the disclosed apparatus have been illustrated and described, it will be understood that various changes, additions and modifications can be made without departing from the spirit and scope of the present disclosure. Accordingly, no limitation should be imposed on the scope of the presently disclosed invention, except as set forth in the accompanying claims.

## Claims

1. A system for producing an elastomer-filler masterbatch, the system comprising:
an elastomer emulsion stored in a liquid phase in an emulsion reservoir;
a slurry solution stored in a liquid phase in a slurry reservoir;
an intensive mixing tool (10) in fluid communication with each of the emulsion reservoir and the slurry reservoir, the intensive mixing tool comprising:
an intensive mixing unit (12) having a central body (14) of predetermined height that is coextensive with an inlet extent (14a) and an opposed outlet extent (14b), the central body (14) including an external quadrilateral surface (14c) and an annular inner wall surface (18) that defines a generally cylindrical mixing chamber (20) of predetermined cross-sectional diameter relative to a central axis of the mixing chamber and having a central axis that is coaxial with a central axis of the mixing body (14), the mixing chamber (20) having a predetermined length that is coextensive with an inlet extent (20a) of the mixing chamber and an egress extent (16a) of an integral and generally cylindrical projection (16) that depends normally from the outlet extent (14b) of the central body (14), **characterized by**
an injector inlet (22) that extends normally from each of a pair of opposed side surfaces (14c) of the central body such that at least a pair of injection inlets are located symmetrically and in opposing manner relative to a central axis of the central body, each injector inlet (22) including a supply conduit (24) defined therein that establishes fluid communication between an injector ingress (22a) via which one of an elastomer emulsion and a slurry solution enter the mixing unit (12) and a corresponding injection conduit (26) in registry therewith, each injector inlet establishing fluid communication between one of an elastomer emulsion reservoir from which a predetermined volume of the emulsion is introduced as a continuous flow under pressure, and a slurry solution reservoir from which a predetermined volume of the slurry is introduced as a continuous flow under pressure such that simultaneous injection of the elastomer emulsion and the slurry solution into the mixing chamber forms a vortex therein; and
a supply piece (28) that is detachably secured with each injector inlet (22) at a respective injector ingress (22a) thereof, the supply piece (28) having a predetermined length coextensive with a supply extent (28a) and a delivery extent (28b) of the supply piece, and the supply piece being in fluid communication with one of the emulsion reservoir and the slurry reservoir to facilitate uninterrupted delivery of a respective continuous flow to the mixing unit (12), the supply piece having a generally frustoconical conduit (30) defined therein that is coextensive with the supply extent (28a) and the delivery extent (28b) of the supply piece, the conduit (30) of the supply piece having a variable cross-sectional diameter from the supply extent (28a) of the supply piece, at which the conduit of the supply piece has a cross-sectional diameter commensurate with a cross-sectional diameter of a delivery conduit in fluid communication therewith, to the delivery extent (28b) of the supply piece, having a cross-sectional diameter commensurate with the cross-sectional diameter of the feed section (24b) of the supply conduit (24).

2. The system of claim 1, wherein:
each supply conduit (24) includes a generally cylindrical entry portion (24a) of predetermined length that feeds into a feed portion (24b) of the supply conduit with the feed portion having a generally frustoconical geometry with a predetermined extent that is coextensive with a base (24b') disposed adjacent the entry portion (24a) and a summit (24b") disposed adjacent a feeding extent (26a) of a corresponding injection conduit (26), and a tapering wall (24w) of each feed portion is defined at a predetermined acute angle (θ) relative to a central axis of the supply conduit and the corresponding injection conduit; and
each injection conduit (26) includes a predetermined length that is coextensive with its feeding extent and an opposed delivery extent (26b) that delivers a continuous flow from the corresponding supply conduit to the mixing chamber (20), each injection conduit (26) having a predetermined cross-sectional diameter that remains constant along the length thereof and that corresponds to a cross-sectional diameter of a corresponding summit (24b") of the feed portion (24b) of the supply conduit.

3. The system of claim 2, wherein the angle (θ) is from about 30° to about 45° inclusive.

4. The system of any of claims 1 to 3, wherein the injection inlet (22) of the intensive mixing tool (10) includes a recess defined proximate each injector ingress (22) so as to accommodate a sealing member thereby.

5. The system of any of claims 1 to 4, wherein the intensive mixing tool (10) further comprises a mixture outlet (40) in detachable securement with the central body (14) so as to establish fluid communication therewith, the mixture outlet including an elongate cylindrical member of predetermined length that is coextensive with an ingress extent (40a) disposed at or adjacent the egress extent (16a) of the projection (16), and an opposed egress extent (40b), the mixture outlet also including a generally cylindrical conduit (42) defined along the length thereof and having a constant cross-sectional diameter.

6. The system of any of claims 1 to 5, wherein the central body (14) of the intensive mixing tool (10) includes a recess (14d) defined within the central body that establishes fluid communication with the mixing chamber (20), the recess having a central axis that is coextensive with the central axes of the central body (14) and the mixing chamber (20).

7. The system of claim 6, wherein the intensive mixing tool (10) further comprises a closure (34) disposed along a top surface (14c^{t}) of the central body and having a geometry that complements insertion of the closure therein.

8. The system of any of claims 1 to 7, wherein:
the elastomer emulsion comprises an elastomer selected from at least one of natural rubber, at least one synthetic elastomer and one or more elastomer blends; and
the slurry solution comprises a solution in which filler particles are dispersed in an aqueous medium, and the filler is selected from at least one of carbon black, silica, kaolin, chalk, synthesized organic charges, natural organic charges, and equivalents and combinations thereof.

9. The system of any of claims 1 to 8, wherein the central body of intensive mixing tool (10) includes two pairs of generally cylindrical tangential injector inlets (22), with one pair of injector inlets located symmetrically and in opposing manner relative to one another and relative to the central axis of the central body (14) so as to inject a continuous flow of the elastomer emulsion into the mixing chamber, and with another pair of injector inlets (22), located symmetrically and in opposing manner relative to one another and relative to the central axis of the central body (14) so as to inject a continuous flow of the slurry into the mixing chamber, with the injector inlets that inject the slurry into the mixing chamber being normally offset from the injector inlets that inject the emulsion.

10. A method of producing an elastomer-filler masterbatch, comprising the following steps:
providing a system according to any of claims 1 to 9;
introducing the elastomer emulsion into at least one injector inlet (22) as a continuous flow under pressure;
introducing the slurry solution into at least one other injector inlet (22) as a continuous flow under pressure; and
simultaneously injecting a predetermined volume of the elastomer emulsion and a predetermined volume of the slurry solution into the mixing chamber such that the separately injected flows impinge upon one another and form a vortex in the mixing chamber to obtain a flow of coagulated material therefrom that is the masterbatch.

11. The method of claim 10, further comprising the step of introducing at least one salt during the step of simultaneously injecting the elastomer emulsion and the slurry solution into the mixing chamber (20).

12. The method of claim 10 or claim 11, further comprising, during the step of simultaneously injecting the elastomer emulsion and the slurry solution into the mixing chamber, the step of introducing one or more components selected from one or more antioxidants, sulfur, one or more resins, one or more catalysts, one or more coupling agents, one or more elastomer composites and any equivalent and combination thereof.

## Patentansprüche

1. System zur Herstellung eines Elastomer-Füllstoff-Masterbatches, wobei das System Folgendes umfasst:
eine Elastomeremulsion, die in einer flüssigen Phase in einem Emulsionsbehälter gespeichert wird;
eine Schlammlösung, die in einer flüssigen Phase in einem Schlammbehälter gespeichert wird;
einen Intensivmischer (10) in Fluidverbindung mit jedem aus dem Emulsionsbehälter und dem Schlammbehälter, wobei der Intensivmischer Folgendes umfasst:
eine Intensivmischeinheit (12) mit einem zentralen Körper (14) von vorbestimmter Höhe, die koextensiv mit einer Einlassausdehnung (14a) und einer gegenüberliegenden Auslassausdehnung (14b) ist, wobei der zentrale Körper (14) eine externe vierseitige Oberfläche (14c) und eine ringförmige innere Wandoberfläche (18) umfasst, die eine im Allgemeinen zylindrische Mischkammer (20) von vorbestimmtem Querschnittsdurchmesser bezüglich einer mittleren Achse der Mischkammer und eine mittlere Achse aufweisend, die koaxial mit einer mittleren Achse des Mischkörpers (14) ist, definiert, wobei die Mischkammer (20) eine vorbestimmte Länge aufweist, die koextensiv mit einer Einlassausdehnung (20a) der Mischkammer und einer Austrittsausdehnung (16a) eines integralen und im Allgemeinen zylindrischen Vorsprungs (16) ist, der normal von der Auslassausdehnung (14b) des zentralen Körpers (14) abhängt, **gekennzeichnet durch**
einen Injektoreinlass (22), der sich normal von jedem aus einem Paar von einander gegenüberliegenden Seitenoberflächen (14c) des zentralen Körpers erstreckt, sodass zumindest ein Paar von Injektionseinlässen symmetrisch und in einer gegenüberliegenden Weise bezüglich einer mittleren Achse des zentralen Körpers befindlich ist, wobei jeder Injektoreinlass (22) einen darin definierten Zufuhrkanal (24) umfasst, der eine Fluidverbindung zwischen einem Injektoreintritt (22a), über den eine aus einer Elastomeremulsion und einer Schlammlösung in die Mischeinheit (12) gelangt, und einem entsprechenden, damit deckungsgleichen Injektionskanal (26) herstellt, wobei jeder Injektoreinlass eine Fluidverbindung zwischen einem aus einem Elastomeremulsionsbehälter, von dem ein vorbestimmtes Volumen der Emulsion als ein kontinuierlicher Strom unter Druck eingeführt wird, und einem Schlammlösungsbehälter, aus dem ein vorbestimmtes Volumen von Schlamm als ein kontinuierlicher Strom unter Druck eingeführt wird, herstellt, sodass gleichzeitige Injektion der Elastomeremulsion und der Schlammlösung in die Mischkammer einen Wirbel darin bildet; und
ein Zufuhrstück (28), das lösbar mit jedem Injektoreinlass (22) an einem entsprechenden Injektoreintritt (22a) davon gesichert ist, wobei das Zufuhrstück (28) eine vorbestimmte Länge aufweist, die koextensiv mit einer Zufuhrausdehnung (28a) und einer Ausgabeausdehnung (28b) des Zufuhrstücks ist, und wobei das Zufuhrstück in Fluidverbindung mit dem einem aus dem Emulsionsbehälter und dem Schlammbehälter ist, um eine ununterbrochene Ausgabe eines entsprechenden kontinuierlichen Stroms zur Mischeinheit (12) zu ermöglichen, wobei das Zufuhrstück einen darin definierten, im Allgemeinen kegelstumpfförmigen Kanal (30) aufweist, der koextensiv mit der Zufuhrausdehnung (28a) und der Ausgabeausdehnung (28b) des Zufuhrstücks ist, wobei der Kanal (30) des Zufuhrstücks einen veränderlichen Querschnittsdurchmesser aufweist, von der Zufuhrausdehnung (28a) des Zufuhrstücks, wo der Kanal des Zufuhrstücks einen Querschnittsdurchmesser aufweist, der gleich groß wie der Querschnittsdurchmesser eines Ausgabekanals in Fluidverbindung damit ist, bis zur Ausgabeausdehnung (28b) des Zufuhrstücks, die einen Querschnittsdurchmesser aufweist, der gleich groß wie der Querschnittsdurchmesser des Einspeiseabschnitts (24b) des Zufuhrkanals (24) ist.

2. System nach Anspruch 1, wobei:
jeder Zufuhrkanal (24) einen im Allgemeinen zylindrischen Eingangsteil (24a) einer vorbestimmten Länge umfasst, der in einen Einspeiseteil (24b) des Zufuhrkanals führt, wobei der Einspeiseteil eine im Allgemeinen kegelstumpfförmige Geometrie mit einer vorbestimmten Ausdehnung aufweist, die koextensiv mit einer Basis (24b'), angeordnet angrenzend an den Eingangsteil (24a), und einem Gipfel (24b"), angeordnet angrenzend an eine Einspeiseausdehnung (26a) eines entsprechenden Injektionskanals (26), ist, und wobei eine schräg zulaufende Wand (24w) jedes Einspeiseteils bei einem vorbestimmten spitzen Winkel (θ) relativ zu einer mittleren Achse des Zufuhrkanals und des entsprechenden Injektionskanals definiert ist; und
jeder Injektionskanal (26) eine vorbestimmte Länge umfasst, die koextensiv mit seiner Einspeiseausdehnung und einer gegenüberliegenden Ausgabeausdehnung (26b) ist, die einen kontinuierlichen Strom vom entsprechenden Zufuhrkanal zur Mischkammer (20) ausgibt, wobei jeder Injektionskanal (26) einen vorbestimmten Querschnittsdurchmesser aufweist, der entlang der Länge davon konstant bleibt und der einem Querschnittsdurchmesser eines entsprechenden Gipfels (24b") des Einspeiseteils (24b) des Zufuhrkanals entspricht.

3. System nach Anspruch 2, wobei der Winkel (θ) von etwa 30° bis einschließlich etwa 45° ist.

4. System nach einem der Ansprüche 1 bis 3, wobei der Injektionseinlass (22) des Intensivmischers (10) eine Vertiefung umfasst, die nahe jedem Injektoreintritt (22) definiert ist, um dadurch ein Abdichtungselement aufzunehmen.

5. System nach einem der Ansprüche 1 bis 4, wobei der Intensivmischer (10) ferner einen Gemischauslass (40) in lösbarer Sicherung mit dem zentralen Körper (14) umfasst, um eine Fluidverbindung damit herzustellen, wobei der Gemischauslass ein längliches zylindrisches Element von vorbestimmter Länge umfasst, das koextensiv mit einer Eintrittsausdehnung (40a), angeordnet an oder angrenzend an die Austrittsausdehnung (16a) des Vorsprungs (16), und einer gegenüberliegenden Austrittsausdehnung (40b) ist, wobei der Gemischauslass auch einen im Allgemeinen zylindrischen Kanal (42) umfasst, der entlang der Länge davon definiert ist und einen konstanten Querschnittsdurchmesser aufweist.

6. System nach einem der Ansprüche 1 bis 5, wobei der zentrale Körper (14) des Intensivmischers (10) eine Vertiefung (14d) umfasst, die innerhalb des zentralen Körpers definiert ist, die eine Fluidverbindung mit der Mischkammer (20) herstellt, wobei die Vertiefung eine mittlere Achse aufweist, die koextensiv mit den mittleren Achsen des zentralen Körpers (14) und der Mischkammer (20) ist.

7. System nach Anspruch 6, wobei der Intensivmischer (10) ferner einen Verschluss (34) umfasst, der entlang einer oberen Oberfläche (14c^{t}) des zentralen Körpers angeordnet ist und eine Geometrie aufweist, die die Einsetzung des Verschlusses darin ergänzt.

8. System nach einem der Ansprüche 1 bis 7, wobei:
die Elastomeremulsion ein Elastomer umfasst, das aus zumindest einem aus Naturkautschuk, zumindest einem synthetischen Elastomer und einer oder mehreren Elastomermischungen ausgewählt wird; und
die Schlammlösung eine Lösung umfasst, in der Füllstoffpartikel in einem wässrigen Medium dispergiert sind, und wobei der Füllstoff aus zumindest einem aus Industrieruß, Siliziumdioxid, Kaolin, Kreide, synthetisierten organischen Ladungen, natürlichen organischen Ladungen und Äquivalenten und Kombinationen davon ausgewählt wird.

9. System nach einem der Ansprüche 1 bis 8, wobei der zentrale Körper des Intensivmischers (10) zwei Paare von im Allgemeinen zylindrischen tangentialen Injektoreinlässen (22) umfasst, wobei ein Paar von Injektoreinlässen symmetrisch und in einer gegenüberliegenden Weise relativ zueinander und relativ zur mittleren Achse des zentralen Körpers (14) positioniert ist, um einen kontinuierlichen Strom der Elastomeremulsion in die Mischkammer zu injizieren, und wobei ein anderes Paar von Injektoreinlässen (22) symmetrisch und in gegenüberliegender Weise relativ zueinander und relativ zur mittleren Achse des zentralen Körpers (14) positioniert ist, um einen kontinuierlichen Strom des Schlamms in die Mischkammer zu injizieren, wobei die Injektoreinlässe, die den Schlamm in die Mischkammer, injizieren, normal versetzt gegenüber den Injektoreinlässen sind, die die Emulsion injizieren.

10. Verfahren zur Herstellung eines Elastomer-Füllstoff-Masterbatches, das die folgenden Schritte umfasst:
Bereitstellen eines Systems nach einem der Ansprüche 1 bis 9;
Einführen der Elastomeremulsion in zumindest einen Injektoreinlass (22) als kontinuierlicher Strom unter Druck;
Einführen der Schlammlösung in zumindest einen anderen Injektoreinlass (22) als kontinuierlicher Strom unter Druck; und
gleichzeitiges Injizieren eines vorbestimmten Volumens der Elastomeremulsion und eines vorbestimmten Volumens der Schlammlösung in die Mischkammer, sodass die separat injizierten Ströme aufeinander auftreffen und einen Wirbel in der Mischkammer bilden, um einen Strom von koaguliertem Material daraus zu erhalten, das das Masterbatch ist.

11. Verfahren nach Anspruch 10, ferner umfassend den Schritt des Einführens zumindest eines Salzes während des Schrittes des gleichzeitigen Injizierens der Elastomeremulsion und der Schlammlösung in die Mischkammer (20).

12. Verfahren nach Anspruch 10 oder Anspruch 11, ferner umfassend, während des Schrittes des gleichzeitigen Injizierens der Elastomeremulsion und der Schlammlösung in die Mischkammer, den Schritt des Einführens von einer oder mehreren Komponenten, die ausgewählt werden aus einem oder mehreren Antioxidantien, Schwefel, einem oder mehreren Harzen, einem oder mehreren Katalysatoren, einem oder mehreren Kopplungsmitteln, einem oder mehreren Elastomerverbundstoffen und beliebigen Äquivalenten und Kombinationen daraus.

## Revendications

1. Système de production d'un mélange maître d'élastomère et de charge, le système comprenant :
une émulsion d'élastomère conservée en phase liquide dans un réservoir d'émulsion ;
une solution de suspension conservée en phase liquide dans un réservoir de suspension ;
un appareil de mélangeage intensif (10) en communication d'écoulement avec le réservoir d'émulsion et le réservoir de suspension, l'appareil de mélangeage intensif comprenant :
une unité (12) de mélangeage intensif présentant un corps central (14) de hauteur prédéterminée définie entre un niveau d'entrée (14a) et un niveau de sortie (14b) opposé, le corps central (14) comprenant une surface externe (14c) en quadrilatère et une surface intérieure (18) de paroi annulaire qui définit une chambre de mélangeage (20) globalement cylindrique dont le diamètre de la section transversale est prédéterminé par rapport à un axe central de la chambre de mélangeage et dont l'axe central est coaxial par rapport à l'axe central du corps central (14), la chambre de mélangeage (20) présentant une longueur prédéterminée définie entre un niveau d'entrée (20a) de la chambre de mélangeage et un niveau de sortie (16a) d'un appendice (16) globalement cylindrique formé d'un seul tenant avec elle, qui commence normalement au niveau de sortie (14b) du corps central (14),
**caractérise par** une entrée d'injecteur (22) qui déborde normalement de deux surfaces latérales opposées (14c) du corps central de telle sorte qu'au moins deux entrées d'injection d'une paire soient situées l'une en face de l'autre et symétriquement par rapport à l'axe central du corps central, un conduit d'alimentation (24) étant défini dans chaque entrée d'injecteur (22) et établissant une communication d'écoulement entre une embouchure d'injecteur (22a) par laquelle une émulsion d'élastomère ou une solution de suspension pénètrent dans l'unité de mélangeage (12) et un conduit d'injection (26) correspondant aligné sur le conduit d'alimentation, chaque entrée d'injecteur établissant une communication d'écoulement entre un réservoir d'émulsion d'élastomère depuis lequel un débit volumique prédéterminé de l'émulsion est introduit dans la chambre de mélangeage en écoulement continu sous pression et un réservoir de solution de suspension depuis lequel un débit volumique prédéterminé de la suspension est introduit dans la chambre de mélangeage sous la forme d'un écoulement continu sous pression, de telle sorte que l'injection simultanée de la solution d'élastomère et de la solution de suspension dans la chambre de mélangeage y forme un vortex ; et
une pièce d'alimentation (28) fixée de manière libérable sur chaque entrée d'injecteur (22) sur son embouchure d'injecteur (22a) respective, la pièce d'alimentation (28) présentant une longueur prédéterminée définie entre un niveau d'alimentation (28a) et un niveau de sortie (28b) de la pièce d'alimentation, la pièce d'alimentation étant en communication d'écoulement avec le réservoir d'émulsion ou le réservoir de suspension de manière à permettre l'apport ininterrompu d'un écoulement continu respectif dans l'unité de mélangeage (12), un conduit (30) globalement tronconique étant défini dans la pièce d'alimentation entre le niveau d'alimentation (28a) et le niveau de sortie (28b) de la pièce d'alimentation, le conduit (30) de la pièce d'alimentation présentant une section transversale de diamètre variable entre le niveau d'alimentation (28a) de la pièce d'alimentation, où le conduit de la pièce d'alimentation présente une section transversale dont le diamètre correspond au diamètre de la section transversale d'un conduit d'alimentation en communication d'écoulement avec lui, et le niveau de sortie (28b) de la pièce d'alimentation dont le diamètre de la section transversale correspond au diamètre de la section transversale de la section d'alimentation (24b) du conduit d'alimentation (24).

2. Système selon la revendication 1, dans lequel chaque conduit d'alimentation (24) comprend une portion d'entrée (24a) globalement cylindrique, de longueur prédéterminée, qui alimente une portion d'alimentation (24b) du conduit d'alimentation, la portion d'alimentation présentant une géométrie globalement tronconique qui s'étend de manière prédéterminée entre une base (24b') disposée en position adjacente à la portion d'alimentation (24a) et un sommet (24b") disposé en position adjacente au niveau d'alimentation (26a) d'un conduit d'injection (26) correspondant, et une paroi effilée (24w) de chaque portion d'alimentation définie à un angle aigu prédéterminé (θ) par rapport à l'axe central du conduit d'alimentation et du conduit d'injection correspondant et chaque conduit d'alimentation (24) comprend une longueur prédéterminée définie entre son niveau d'alimentation et un niveau de sortie opposé (26b) qui délivre un écoulement continu dans la chambre de mélangeage (20) depuis le conduit d'alimentation correspondant, chaque conduit d'injection (26) présentant une section transversale dont le diamètre prédéterminé reste constant sur sa longueur et correspond au diamètre de la section transversale d'un sommet (24b") correspondant de la portion d'alimentation (24b) du conduit d'alimentation.

3. Système selon la revendication 2, dans lequel l'angle (θ) est compris entre 30° et environ 45°, ces valeurs incluses.

4. Système selon l'une quelconque des revendications 1 à 3, dans lequel l'entrée d'injection (22) de l'appareil de mélangeage intensif (10) comprend un creux défini à proximité de chaque embouchure d'injecteur (22a) de manière à permettre le placement d'un élément d'étanchéité.

5. Système selon l'une quelconque des revendications 1 à 4, dans lequel l'appareil de mélangeage intensif (10) comprend en outre une sortie (40) de mélange qui est fixée de manière libérable sur le corps central (14) de manière à établir une communication d'écoulement avec lui, la sortie de mélange comprenant un élément cylindrique allongé de longueur prédéterminée définie entre un niveau d'embouchure (40a) disposé au niveau de sortie (16a) de l'appendice (16) ou à proximité de ce dernier et un niveau de sortie (40b) opposé, la sortie de mélange comprenant également un conduit (42) globalement cylindrique défini suivant sa longueur et dont la section transversale a un diamètre constant.

6. Système selon l'une quelconque des revendications 1 à 5, dans lequel le corps central (14) de l'appareil de mélangeage intensif (10) comprend un creux (14d) défini à l'intérieur du corps central et établissant une communication d'écoulement avec la chambre de mélangeage (20), le creux présentant un axe central qui coïncide avec les axes centraux du corps central (14) et de la chambre de mélangeage (20).

7. Système selon la revendication 6, dans lequel l'appareil de mélangeage intensif (10) comprend en outre une fermeture (34) disposée sur une surface supérieure (14c^{t}) du corps central et dont la géométrie permet l'insertion de la fermeture en son sein.

8. Système selon l'une quelconque des revendications 1 à 7, dans lequel la suspension d'élastomère comprend un élastomère sélectionné parmi au moins un caoutchouc naturel, au moins un élastomère de synthèse et un ou plusieurs mélanges d'élastomère, la solution de suspension comprenant une solution dans laquelle des particules de charge sont dispersées dans un milieu aqueux, la charge étant sélectionnée parmi le noir de carbone, la silice, le kaolin, la craie, les charges organiques de synthèse, les charges organiques naturelles et/ou leurs équivalents et leurs combinaisons.

9. Système selon l'une quelconque des revendications 1 à 8, dans lequel le corps central de l'appareil de mélangeage intensif (10) comprend deux paires d'entrées d'injecteur (22) tangentielles, globalement cylindriques, les entrées d'injecteur d'une paire étant situées l'une en face d' l'autre et symétriquement par rapport à l'axe central du corps central (14) de manière à injecter un écoulement continu de l'émulsion d'élastomère dans la chambre de mélangeage et les entrées d'injecteur (22) de l'autre paire situées l'une en face de l'autre et symétriquement par rapport à l'axe central du corps central (14) de manière à injecter un écoulement continu de suspension dans la chambre de mélangeage, les entrées d'injecteur qui injectent la suspension dans la chambre de mélangeage étant normalement décalées des entrées d'injecteur qui injectent l'émulsion.

10. Procédé de production d'un mélange maître d'élastomère et de charge, comprenant les étapes suivantes :
- prévoir un système selon l'une quelconque des revendications 1 à 9 ;
- introduire une émulsion d'élastomère dans au moins une entrée d'injecteur (22) sous la forme d'un écoulement continu sous pression ;
- introduire une solution de suspension dans au moins une autre entrée d'injecteur (22) sous la forme d'un écoulement continu sous pression ; et
- injecter simultanément un débit volumique prédéterminé de l'émulsion d'élastomère et un débit volumique prédéterminé de la solution de suspension dans la chambre de mélangeage de telle sorte que les écoulements injectés séparément viennent se percuter mutuellement et forment dans la chambre de mélangeage un vortex pour obtenir ainsi un écoulement de matériau coagulé qui forme le mélange maître.

11. Procédé selon la revendication 10, comprenant en outre l'étape qui consiste à introduire au moins un sel pendant l'étape d'injection simultanée de l'émulsion d'élastomère et de la solution de suspension dans la chambre de mélangeage (20).

12. Procédé selon la revendication 10 ou la revendication 11, comprenant en outre, pendant l'étape d'injection simultanée de l'émulsion d'élastomère et de la solution de suspension dans la chambre de mélangeage, l'étape qui consiste à introduire un ou plusieurs composants sélectionnés parmi un ou plusieurs antioxydants, le soufre, une ou plusieurs résines, un ou plusieurs catalyseurs, un ou plusieurs agents de couplage, un ou plusieurs composites d'élastomère ainsi que tout équivalent et toute combinaison de ceux-ci.
